# EUROPEAN PATENT APPLICATION

(11) **EP 2 420 925 A2**
(43) Date of publication of application: **22.02.2012**
(21) Application number: 11177295.0
(22) Date of filing: 11.08.2011
(51) Int. Cl.: G06F 3/048

(54) **Information processing device, computer program product, and display control method for cursor control**

(30) Priority: 20.08.2010 JP 2010185070
(71) Applicant: Sony Corporation, Tokyo 108-0075 (JP)
(72) Inventor: Homma, Fuminori, Minato-ku, Tokyo 108-0075 (JP); Miyazaki, Reiko, Minato-ku, Tokyo 108-0075 (JP); Satoh, Nariaki, Minato-ku, Tokyo 108-0075 (JP); Nashida, Tatsushi, Minato-ku, Tokyo 108-0075 (JP)
(74) Representative: Jackson, Jonathan Andrew

(57) **Abstract**

An apparatus, method and computer program product cooperate to prepare frame information that causes a frame to be displayed on a display unit at an operation target position that is an offset of a predetermined distance on said display from an operation detection position. The frame information is then sent to the display unit for displaying the frame. A recognition unit detects the operation detection position in response to a contact made with the display. The display may be a touch panel or a proximity detection display, and the frame has a shape with an interior portion, a border portion and an exterior portion.

## Description

The present disclosure relates to an information processing device, a computer program product, and a display control method.

In recent years, various devices with touch screens have been widely used. A touch screen is also called a touch panel, and implements two functionalities that are displaying data and receiving data input on a single screen. The performance of touch screens is progressing year by year. Thus, it is expected that touch screens, which are capable of representing image quality with an equal level to the resolution of the human visual perception, will be commercialized in the near future.

As the display resolution of touch screens has increased, a discrepancy between the display resolution and the input resolution of the touch screens has also become noticeable. An increase in the discrepancy between the display resolution and the input resolution can make a so-called "fat finger" problem more serious. "Fat finger" is a term used in association with a problem attributable to the width of a finger of a user who is handling the device. For example, the term "fat finger" can be used in contexts in which input errors occur not only when a touch screen is used but also when a keyboard, a keypad, or a button is used. However, a touch screen where data is displayed and input on a single screen has, in addition to the problem of input errors, a peculiar problem that an object (e.g., a button, an icon, or text) on the screen would be covered with a finger (or a stylus used instead of a finger). Such problem is also true for a proximity detection screen that implements two functionalities including displaying data and receiving data input on a single screen like a touch screen (the term "proximity detection screen" refers to a screen that recognizes data input by a user upon detecting that an input object has been placed in proximity to the screen, without the need for direct contact of the input object with the screen).

As a technology that can be used to avoid the "fat finger" problem, some of the existing products are providing a function called loupe (or a magnifying glass). The loupe function is typically a function of displaying an area, which is specified by a user, within a screen by magnifying it. However, even when the loupe function is used, it is unavoidable that a finger would at least partially cover an object when operating the magnified area. In addition, a movement of a line of sight of the user along with the magnification display of the area can impair the intuitive interface and increase the burden on the user.

In response to such problems, JP 3744116B proposes providing special areas for moving a cursor and for selecting an object on the shaft portion of an arrow-like cursor whose arrow head indicates the operation target position on a screen. Accordingly, the operation target position and the touch position are separated.

However, as recognized by the present inventors, in the method disclosed in JP 3744116B, areas that can be touched by a user for operation purposes are limited to special small areas. Therefore, versatility of the user interface could be lost, and thus it would be difficult to provide a wide variety of user interfaces in accordance with different purposes.

In light of the foregoing, it is desirable to provide a novel and improved information processing device, computer program product, and display control method that can implement a wide variety of user interfaces on a screen without an operation target being covered.

In particular, a display controller according to an embodiment includes
an interface configured to send frame information that causes a display unit to display a frame, and
a controller that is connected to the interface and sends the frame information to the display so the frame is positioned on the display at an operation target position that is offset by a predetermined distance on the display from an operation detection position.

In one embodiment, a recognition unit is included that detects the operation detection position in response to a contact made with the display at the operation detection position.

In another embodiment, the recognition unit detects the operation detection position based on proximity of a selection device to the display unit without directly contacting the display unit.

In another embodiment the recognition unit detects an abstracted touch event.

In another embodiment, a computer readable storage device is included that stores at least a part of the frame information as cursor definition data that defines a shape and a size of the frame.

In another embodiment, the computer readable storage device also stores an initial value and a current value of the offset.

In another embodiment, the frame has a border in a ring shape, wherein the ring shape being at least one of a continuous ring shape and a ring shape with gaps.

In another embodiment, the frame has a border in a box shape.

In another embodiment, the recognition unit detects a touch event, wherein the controller sends the frame information to the display in response to the touch event.

In another embodiment, the frame remains displayed after a conclusion of the touch event.

In another embodiment, the recognition unit detects when the touch event includes moving a contact point along a surface of the display unit, and the controller causes the frame to move along with the contact point on the display unit while maintaining the offset at the predetermined distance.

In another embodiment, the controller maintains the offset in response to the contact point being dragged side-to-side on the display unit.

In another embodiment the recognition unit recognizes a second touch event that follows the touch event, and the controller moves the frame at a rate that varies according to a gap between the operation detection position and the operation target position at a start of frame movement.

In another embodiment, the recognition unit recognizes a second touch event that comes after the touch event, and the controller moves the frame at a rate that is a function of a gap relative to a threshold.

In another embodiment the recognition unit recognizes a second touch event that comes after the touch event, and the controller moves the frame on the display unit at a rate that is different for respective contact points at
an interior of the frame,
on the frame, and
an exterior of the frame.

In another embodiment the recognition unit successively recognizes a second touch event, and a third touch event that both follow the touch event, and
in response to the third touch event, the controller moves the frame over or around a contact position of the third touch event regardless of the offset.

In another embodiment, the third touch event being one of a multi-tap, a change in pressure, and a flick.

In another embodiment the controller locks a display position about a displayed object.

According to a display control method embodiment, the method includes preparing at a display controller frame information that causes a frame to be displayed on a display unit at an operation target position that is offset at a predetermined distance on the display unit from an operation detection position, and
sending the frame information to the display unit that displays the frame..

According to a computer readable storage device embodiment having computer readable instructions that when executed by a computer processor cause the computer processor to perform a method including
preparing at a display controller frame information that causes a frame to be displayed on a display unit at an operation target position that is offset at a predetermined distance on the display unit from an operation detection position, and
sending the frame information to the display unit that displays the frame.

As described above, the information processing device, the program, and the display control method in accordance with the present disclosure can implement a wide variety of user interfaces on a screen without an operation target being covered.

Various respective aspects and features of the invention are defined in the appended claims. Combinations of features from the dependent claims may be combined with features of the independent claims as appropriate and not merely as explicitly set out in the claims.

Embodiments of the invention will now be described with reference to the accompanying drawings, throughout which like parts are referred to by like references, and in which:

FIG. 1 is a block diagram showing an exemplary hardware configuration of an information processing device in accordance with one embodiment;

FIG. 2 is a block diagram showing an exemplary logical configuration of an information processing device in accordance with one embodiment;

FIG. 3 is an explanatory diagram illustrating an exemplary shape of a cursor in accordance with one embodiment;

FIG. 4 is an explanatory diagram illustrating another exemplary shape of a cursor in accordance with one embodiment;

FIG. 5 is a first explanatory diagram illustrating the offset of a cursor;

FIG. 6 is a second explanatory diagram illustrating the offset of a cursor;

FIG. 7 is an explanatory diagram illustrating a first example of a GUI in accordance with one embodiment;

FIG. 8A is a first explanatory diagram illustrating a second example of a GUI in accordance with one embodiment;

FIG. 8B is a second explanatory diagram illustrating the second example of the GUI in accordance with one embodiment;

FIG. 8C is a third explanatory diagram illustrating the second example of the GUI in accordance with one embodiment;

FIG. 9A is a first explanatory diagram illustrating a third example of a GUI in accordance with one embodiment;

FIG. 9B is a second explanatory diagram illustrating the third example of the GUI in accordance with one embodiment;

FIG. 10 is an explanatory diagram illustrating a fourth example of a GUI in accordance with one embodiment;

FIG. 11A is a first explanatory diagram illustrating a fifth example of a GUI in accordance with one embodiment;

FIG. 11B is a second explanatory diagram illustrating the fifth example of the GUI in accordance with one embodiment;

FIG. 12 is an explanatory diagram illustrating a sixth example of a GUI in accordance with one embodiment;

FIG. 13 is an explanatory diagram illustrating a seventh example of a GUI in accordance with one embodiment;

FIG. 14 is an explanatory diagram illustrating a correction of the operation target position;

FIG. 15A is a schematic diagram illustrating the hardware configuration of an information processing device in accordance with one variation;

FIG. 15B is a schematic diagram illustrating another exemplary hardware configuration of an information processing device in accordance with one variation;

FIG. 16 is a block diagram showing an exemplary logical configuration of an information processing device in accordance with one variation;

FIG. 17A is a first explanatory diagram illustrating an exemplary GUI in accordance with one variation;

FIG. 17B is a second explanatory diagram illustrating an exemplary GUI in accordance with another variation;

FIG. 18 is a flowchart showing an exemplary schematic flow of a display control process in accordance with the aforementioned embodiment; and

FIG. 19 is a flowchart showing an exemplary detailed flow of a display control process when a touch/movement-related event is recognized.

Hereinafter, preferred embodiments of the present disclosure will be described in detail with reference to the appended drawings. Note that, in this specification and the appended drawings, structural elements that have substantially the same function and structure are denoted with the same reference numerals, and repeated explanation of these structural elements is omitted.

"DETAILED DESCRIPTION OF THE EMBODIMENTS" will be described in the following order.
1. Exemplary Configuration of One Embodiment
   1-1. Device Configuration
   1-2. Cursor Shape
   1-3. Cursor Display Position
2. Examples of Various GUIs
   2-1. Fine Adjustment of Cursor Position
   2-2. Movement of Cursor to Absolute Position
   2-3. Object Locking
   2-4. Magnification Display within Cursor
   2-5. Operation in Depth Direction
   2-6. Zoom of Selected Range
   2-7. Deformation of Cursor
   2-8. Correction of Operation Target Position
3. Description of Variations
   3-1. Device Configuration
   3-2. Examples of GUI
4. Exemplary Process Flow
5. Conclusion

### <1. Exemplary Configuration of One Embodiment>

An information processing device described in this specification is typically a device with a touch screen or a proximity detection screen. Examples of the information processing device include a PC (Personal Computer), a smartphone, a portable information terminal (Personal Digital Assistant), a music player, a game terminal, and a digital information home appliance. Alternatively, the information processing device can be a peripheral device that is connected, physically or wirelessly such as via BLUETOOTH, to the aforementioned devices.

### [1-1. Device Configuration]

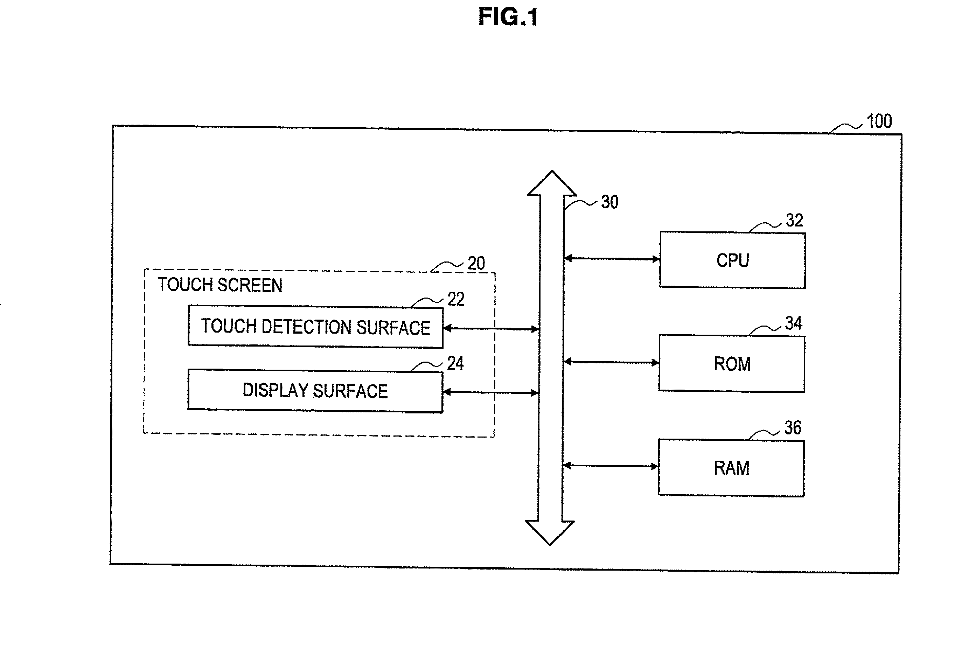

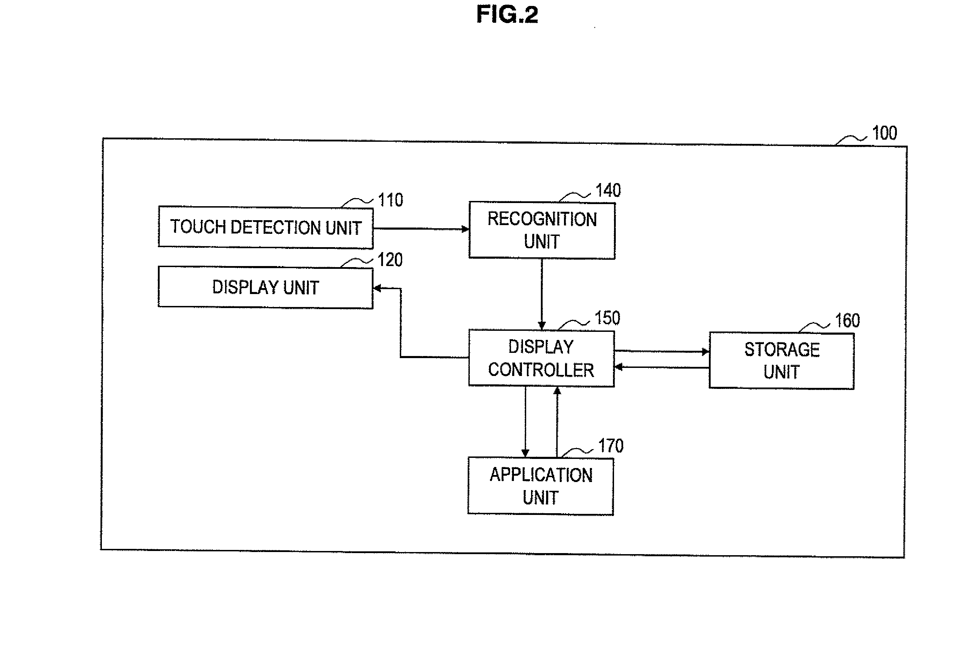

First, the configuration of an information processing device 100 in accordance with one embodiment of the present disclosure will be described with reference to FIGS. 1 and 2. This embodiment will mainly describe an example of the information processing device 100 with a touch screen. However, as will be apparent from the description that follows, many of the features of this embodiment are equally applicable to a case in which the information processing device 100 has a proximity detection screen instead of a touch screen.

### (1) Hardware Configuration

FIG. 1 is a block diagram showing an exemplary hardware configuration of the information processing device 100 in accordance with this embodiment. Referring to FIG. 1, the information processing device 100 includes a touch screen 20, a bus 30, a CPU (Central Processing Unit) 32, ROM (Read Only Memory) 34, and RAM (Random Access Memory) 36.

The touch screen 20 includes a touch detection surface 22 and a display surface 24. The touch detection surface 22 senses a touch of a user on the touch screen 20, and generates an electrical signal corresponding to the operation detection position (i.e., a touch position). The touch detection surface 22 can be formed in accordance with any touch detection scheme such as a resistive film scheme, a surface acoustic wave scheme, or a capacitance scheme. Further, the touch detection surface 22 can also sense the pressure of a touch. When a proximity detection screen is used instead of the touch screen 20, the proximity detection screen senses an input object that is placed in proximity to the screen using, for example, an optical or capacitive proximity sensor. In this case, the proximity detection screen also generates an electrical signal corresponding to the operation detection position (a proximity detection position). The display surface 24 displays an output image from the information processing device 100. The display surface 24 can be implemented using, for example, liquid crystals, organic EL (Organic Light-Emitting Diode: OLED), a CRT (Cathode Ray Tube), or the like.

The bus 30 mutually connects the touch detection surface 22, the display surface 24, the CPU 32, the ROM 34, and the RAM 36.

The CPU 32 controls the overall operation of the information processing device 100. The ROM 34 stores programs and data that constitute software executed by the CPU 32. The RAM 36 temporarily stores programs and data while the CPU 32 is executing a process.

Note that the information processing device 100 can also include components other than those shown in FIG. 1, though not described herein for the sake of clarity of the description.

### (2) Logical Configuration

FIG. 2 is a block diagram showing an exemplary logical configuration of the information processing device 100 in accordance with this embodiment. Referring to FIG. 2, the information processing device 100 includes a touch detection unit 110, a display unit 120, a recognition unit 140, a display controller 150, a storage unit 160, and an application unit 170.

The touch detection unit 110 detects a touch that is sensed by the touch detection surface 22 of the touch screen 20. Then, the touch detection unit 110 outputs information including the operation detection position (which is identical to a touch position in this embodiment, but can be a proximity detection position in other embodiments) that has been detected to the recognition unit 140 in time series order. In addition, the touch detection unit 110 can further output additional information such as the pressure of a touch to the recognition unit 140.

The display unit 120, under the control of the display controller 150, displays the output image from the information processing device 100 using the display surface 24 of the touch screen 20. For example, the output image displayed by the display unit 120 can include an application screen generated by the application unit 170 (described below). In addition, the output image displayed by the display unit 120 can also include a screen of an operating system (not shown) of the information processing device 100. Further, an image of a cursor that is controlled by the display controller 150 can also be superimposed on the output images.

The recognition unit 140, on the basis of the information such as the touch position input from the touch detection unit 110, recognizes various operation events in accordance with a touch of a user on the touch screen 20 (which correspond to touch events in this embodiment, but can be proximity events in other embodiments). In this embodiment, touch events that are recognized by the recognition unit 140 can include, for example, the following three primitive events: a touch start, a touch movement, and a touch end. Each of the three events is associated with its corresponding touch position. When the touch screen 20 has a multi-touch detection function, a plurality of touch positions are associated with each event. Further, the recognition unit 140 can, on the basis of a combination of the primitive touch events, a path of the touch position, or the like, recognize a more abstracted touch event. Examples of abstracted touch events that are recognized by the recognition unit 140 can include a tap, drag, twist, multi-tap, pinch-in, and pinch-out. Further, when the touch detection surface 22 has a function of sensing the pressure of a touch, the recognition unit 140 can recognize a predetermined change in the pressure of a touch as a single touch event. The recognition unit 140 outputs the thus recognized touch event to the display controller 150.

The display controller 150 controls the content of the output image displayed by the display unit 120. For example, the display controller 150 causes the display unit 120 to display an application screen generated by the application unit 170 or a screen of an operating system. In addition, in this embodiment, the display controller 150 causes the display unit 120 to display a specific cursor (described later). Further, the display controller 150, in response to a touch event recognized by the recognition unit 140, controls display of the cursor and the associated object.

The storage unit 160 stores data used for the display controller 150 to control display. For example, the storage unit 160 stores cursor definition data that defines the shape and the size of a cursor displayed by the display controller 150. In addition, for example, the storage unit 160 also stores the initial value and the current value of the offset between an operation target position, which is a position where an operation is intended to be performed via a cursor, and a touch position. Further, for example, the storage unit 160 also stores a setting value related to the amount of a movement of a cursor for when the cursor is moved in response to a touch event (e.g., a drag) that is associated with a movement of a touch position. Exemplary user interfaces that are implemented using such data will be described in detail below.

The application unit 170 provides a user of the information processing device 100 with an application function. For example, the application unit 170 can include one or more of a Web browser, a digital album, a text editor, an e-mail client, a content player, and a game application. The user can utilize such application function(s) via a user interface that uses a specific cursor (described below).

### [1-2. Cursor Shape]

Described next is the basic structure of a cursor used for a user interface that is provided by the information processing device 100 in accordance with this embodiment.

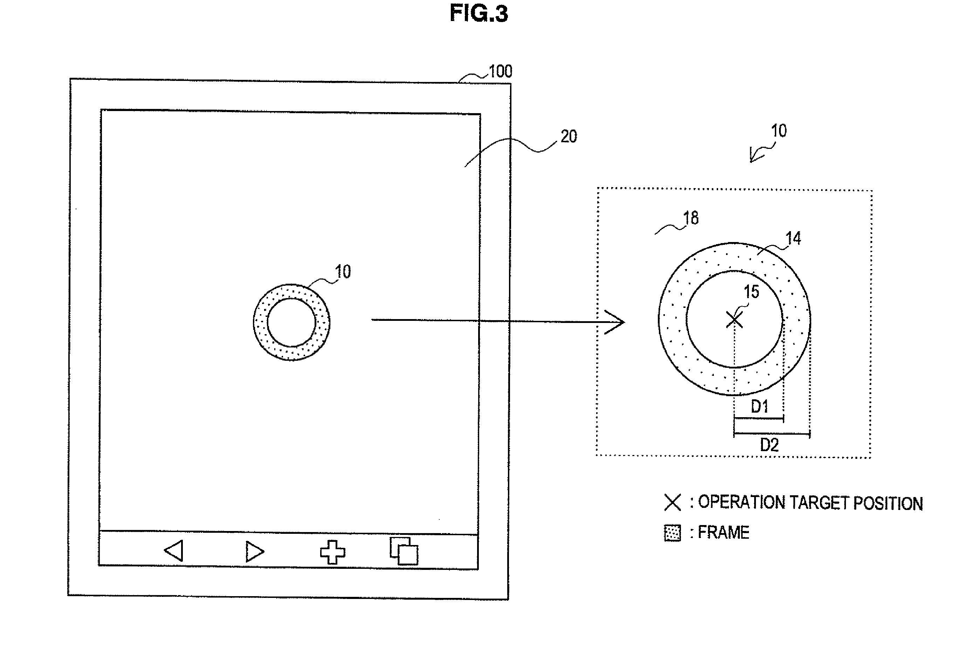

FIG. 3 is an explanatory diagram illustrating an exemplary shape of a cursor. The touch screen 20 of the information processing device 100 is shown to the left in FIG. 3. The touch screen 20 displays an exemplary cursor 10. The cursor 10 has a ring shape with a frame that surrounds the operation target position with a border that separates an inner area from an outer area. The width of the frame may be adjusted (i.e., width of D2 in Figure 3). In the example of Figure 3, the frame has an annular two dimensional (2D) shape. Optionally the frame may be presented in 3-D (such as on a 3D display) by having an added dimension, such as a torroidal shape, a sphere or a cube that is perceived as having a frame that separates an inner volume from an outer volume.

The frame 14 of the enlarged cursor 10 is shown to the right in FIG. 3. The frame 14 is formed by an inner circumference with a radius *D*1 and an outer circumference with a radius D2 each having an operation target position 15 as the center. The values of the radii of the inner circumference and the outer circumference of the frame 14 can be defined by the definition data that is stored in the storage unit 160, for example. The value of the radius D1 can be user-selected from values that allow the average thickness of the fingertips of users to be surely put within the frame 14. The frame 14 can be displayed semi-transparent so that an object on the screen that overlaps the frame 14 is visible. Alternatively, several user selectable two-dimensional frame-shapes may be presented to a user (e.g., racetrack, 4-sided, or n-sided). When presented with the various frame-shapes, a user may selected one. Alternatively, a user may specify the shape by name, or by adjusting (numerically or via a GUI by clicking and dragging a cursor), where D1 and D2 are adjustable parameters, in addition to frame color and transparency level.

An operation directed to the cursor 10 can be performed by, for example, touching inside a rectangular area 18 that has the operation target position 15 as the center. That is, the display controller 150, when the recognition unit 140 has recognized a touch event, and if the touch position of the touch event is within the rectangular area 18, for example, executes control of the user interface in response to the touch event, using the cursor 10.

As shown to the right in FIG. 3, an area inside the rectangular area 18 can be divided into three areas in accordance with the positional relationship with the frame 14 of the cursor 10. A first area is an area inside the frame (ring). For example, when the gap between a touch position detected by the touch detection unit 110 and the operation target position 15 is less than the radius *D*1, a touch event can be recognized as having taken place inside the frame. A second area is an area on the frame. For example, when the gap between a touch position and the operation target position 15 is greater than or equal to the radius *D*1 and less than or equal to the radius D2, a touch event can be recognized as having taken place on the frame. A third area is an area outside the frame (ring). For example, when the gap between a touch position and the operation target position 15 is greater than the radius D2, a touch event can be recognized as having taken place outside the frame.

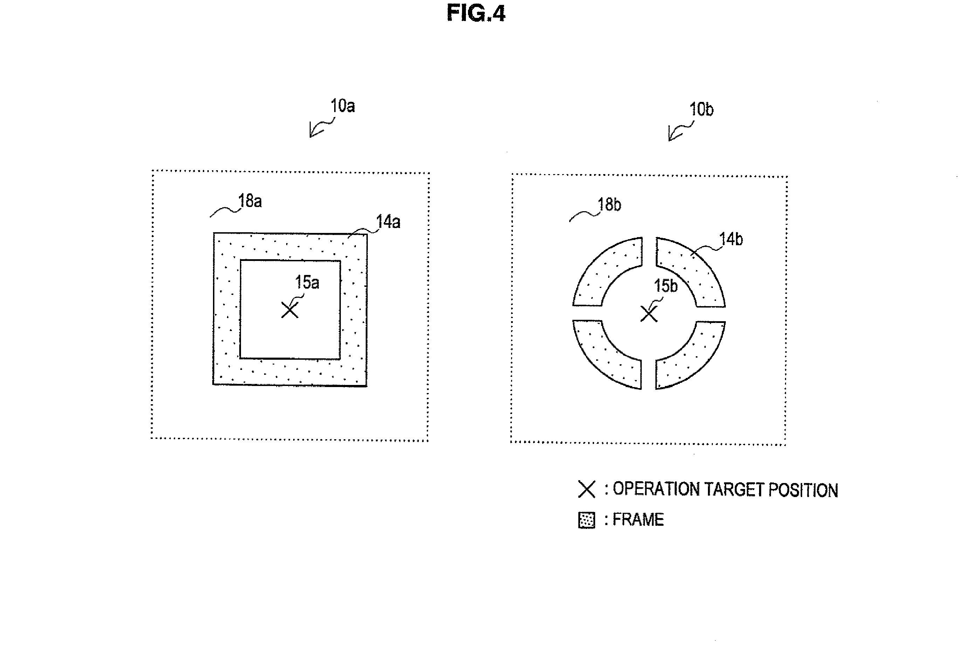

FIG. 4 is an explanatory diagram illustrating another exemplary shape of a cursor. A cursor 10a with a frame 14a that surrounds an operation target position 15a is shown to the left in FIG. 4. The frame 14a of the cursor 10a has a box shape. Meanwhile, a cursor 10b with a frame 14b that surrounds an operation target position 15b is shown to the right in FIG. 4. The frame 14b of the cursor 10b has a ring shape with partial gaps on the top, bottom, right, and left. As described above, a frame of a cursor that is displayed on the touch screen 20 of the information processing device 100 can take various shapes surrounding the operation target position. In addition, the frame of the cursor need not completely surround the operation target position. Even in such cases, the display controller 150 can divide a touch position into three areas that are inside, on, and outside the frame in accordance with the gap between the touch position and the operation target position.

In the following description related to this embodiment, it is assumed that the ring-shape cursor 10 that is exemplarily shown in FIG. 3 is displayed on the touch screen 20.

### [1-3. Cursor Display Position]

The display controller 150 can, when a given touch event has been recognized, display the aforementioned cursor on the touch screen 20.

For example, the display controller 150, when the recognition unit 14 has recognized a given touch event (an event Ev1), determines an operation target position that has a predetermined offset with respect to the touch position of the touch event. Then, the display controller 150 can, when the determined operation target position is located over a target object to be displayed with a cursor, display the cursor 10 surrounding the operation target position.

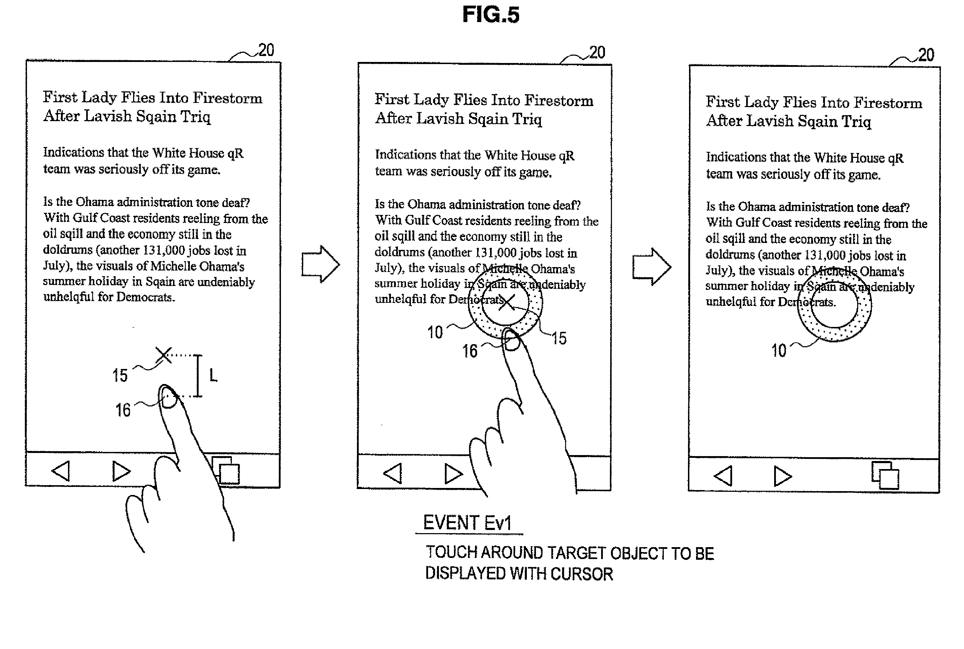

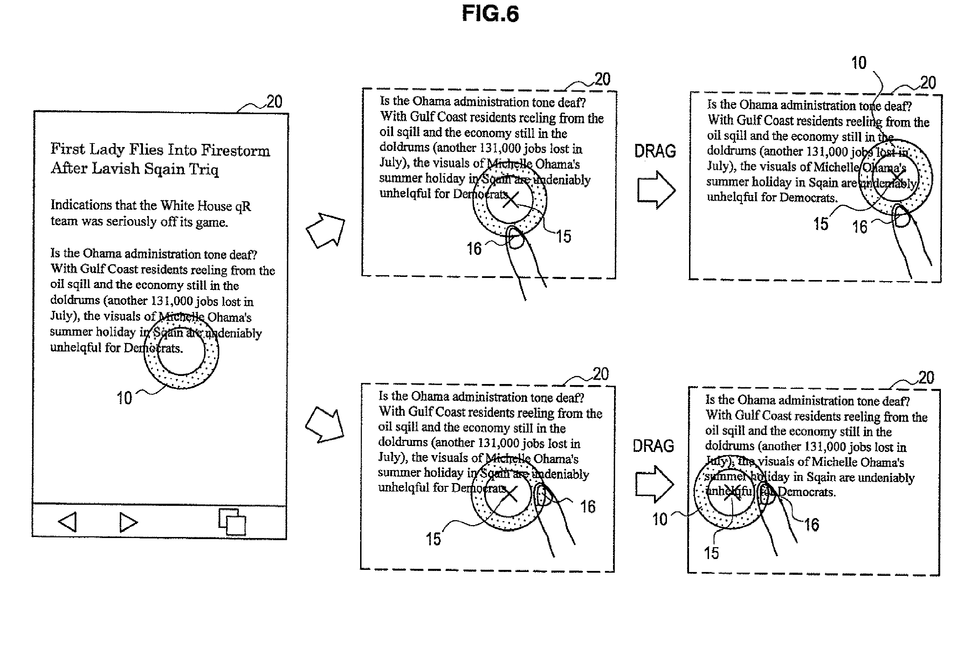

FIGS. 5 and 6 are explanatory diagrams illustrating the offset of the aforementioned cursor.

On the touch screen 20 shown to the left in FIG. 5, the operation target position 15 is displayed above a touch position 16. In this case, the offset between the touch position 16 and the operation target position 15 is given by a distance L in the vertical direction. On the touch screen 20 shown in the center of FIG. 5, the operation target position 15 above the touch position 16 is located on text that is a target object to be displayed with a cursor. Thus, the display controller 150 displays the cursor 10 surrounding the operation target position 15. The cursor 10 displayed in this manner can remain on the touch screen 20 even after a user has lifted his finger (or another input object such as a stylus) off the screen. The touch screen 20 shown to the right in FIG. 5 is a view in which the cursor 10 is displayed on the touch screen 20 with the finger lifted off the screen.

Note that the present disclosure is not limited to the example of FIG. 5, and the display controller 150 can display the cursor 10 upon detecting any other events such as a touch with a pressure level that is higher than a predetermined threshold, a specific menu being selected, or a button being pressed.

The offset shown in the example of FIG. 5 is an offset with the initial value when the cursor 10, which has not been displayed so far, starts to be displayed. Meanwhile, when a user touches around the cursor 10 again after the cursor 10 starts to be displayed, the offset between the new touch position and the operation target position will be stored.

For example, on the touch screen 20 shown in the upper center in FIG. 6, a user is touching a frame below the operation target position 15. Then, when the user drags his finger to the right, the offset at the start of the drag will be maintained, and thus the cursor 10 will move along with the movement of the finger. The touch screen 20 shown to the upper right in FIG. 6 also shows the cursor 10 that has as the operation target position 15 an area above the touch position 16 at the end of the drag.

Meanwhile, on the touch screen 20 shown in the lower center in FIG. 6, for example, a user is touching a frame on the right side of the operation target position 15. Then, when the user drags his finger to the left, the offset at the start of the drag will be maintained, and thus the cursor 10 will move along with the movement of the finger. The touch screen 20 shown to the lower right in FIG. 6 also shows the cursor 10 that has as the operation target position 15 an area on the left side of the touch position 16 at the end of the drag.

Using the aforementioned cursor 10, the information processing device 100 implements a wide variety of graphical user interfaces (GUIs) such as those described in the next section.

### <2. Examples of Various GUls>

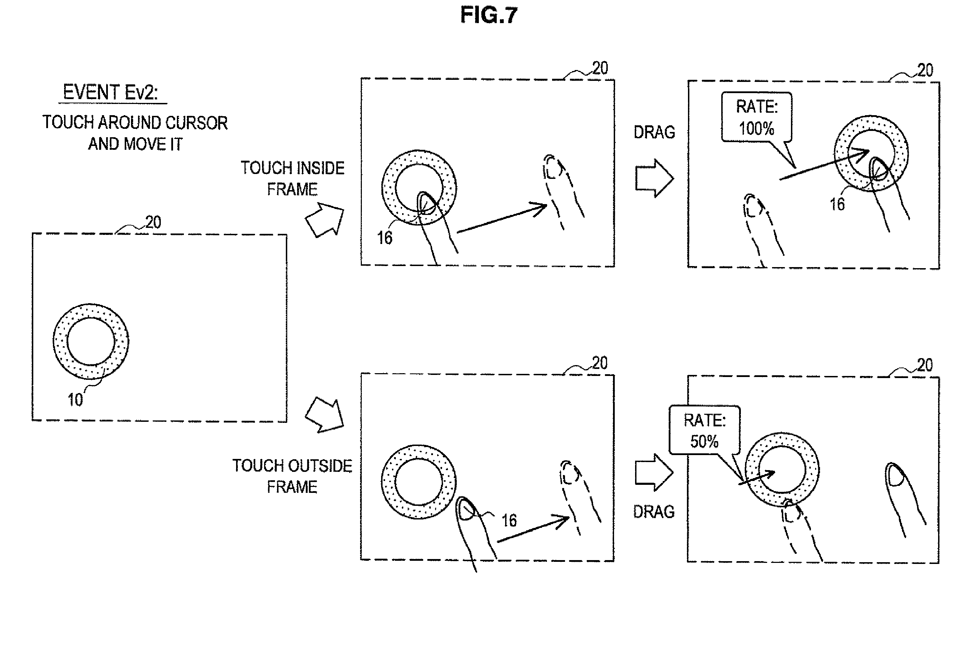

FIG. 7 is an explanatory diagram illustrating a first example of a GUI in accordance with this embodiment. In the scenario of FIG. 7, the display controller 150, when the recognition unit 140 has recognized a second touch event (an event Ev2) associated with a movement of the touch position, moves the cursor at a rate that varies according to the gap between the touch position and the operation target position at the start of the movement. The event Ev2 can be, for example, a drag or a flick.

In the following description, a proportion of the amount of the movement of the cursor to the amount of the movement of the touch position will be referred to as a movement rate. In typical GUls, the amount of the movement of a cursor is equal to the amount of the movement of a touch position, that is, the movement rate is 100 %. In this embodiment, the movement rate can be defined in accordance with the gap between the touch position and the operation target position at the start of the movement, as a setting value to be stored in the storage unit 160. For example, the movement rate can be defined using a threshold to be compared with the aforementioned gap such that when the gap is greater than the threshold, the movement rate is defined as *X*₁ %, and when the gap is less than the threshold, the movement rate is defined as *X*₂ %. At this time, if the threshold is set equal to the value of the radius *D*1 of the inner circumference (or the radius D2 of the outer circumference) of the frame 14 of the cursor 10, the movement rate can be defined differently depending on whether the touch position is inside the frame or not (or outside the frame or not). Alternatively, the movement rate can be defined using a function that takes the aforementioned gap as an argument, for example. As a further alternative, the movement rate can be defined as *Y*1 % if the touch position is inside the frame, *Y*2 % if the touch position is on the frame, and *Y*3 % if the touch position is outside the frame, for example.

In the scenario of FIG. 7, if the aforementioned gap is less than or equal to a threshold that is equal to the radius D2 of the outer circumference of the frame 14 of the cursor 10, the movement rate is 100 %, and if the aforementioned gap is greater than the threshold, the movement rate is 50 %. Such definition of the movement rate is advantageous in a situation where the cursor position should be finely adjusted.

Referring to the upper views in FIG. 7, when a user touches inside the frame of the cursor 10 and drags it, the amount of the movement of the cursor 10 will be equal to the amount of the movement of the touch position 16. That is, the movement rate is 100 %. Meanwhile, referring to the lower views in FIG. 7, when a user touches outside the frame of the cursor 10 and drags it, the amount of the movement of the cursor 10 will be half that of the touch position 16. That is, the movement rate is 50 %.

Such fine adjustment of the cursor position can be utilized in various scenes such as when text with small characters that is displayed on a screen with high display resolution is selected, a screen is scrolled through with a scroll bar or a slider, or when a photograph is selected from among thumbnails of photographs that are displayed in large numbers.

### [2-2. Movement of Cursor to Absolute Position]

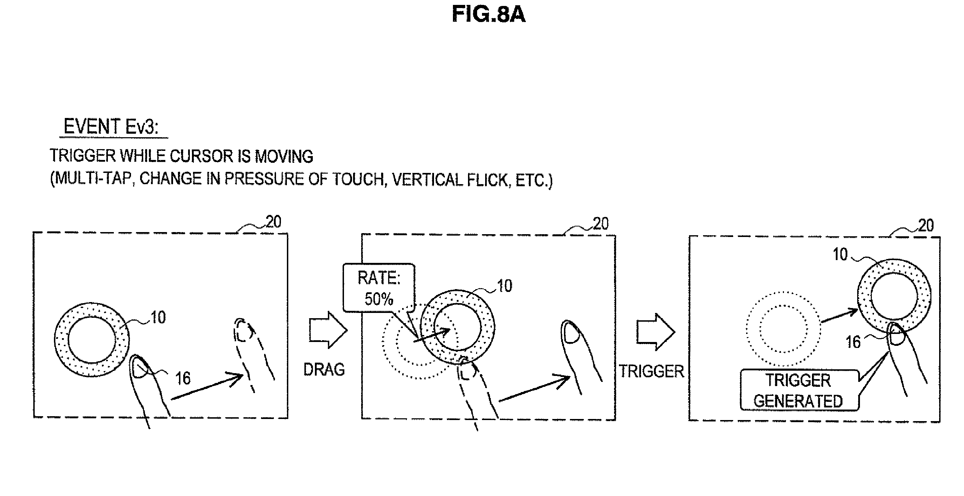

FIGS. 8A to 8C are explanatory diagrams illustrating a second example of a GUI in accordance with this embodiment. In this scenario, the display controller 150, when the recognition unit 140 has recognized a touch event (an event Ev3), displays the cursor 10 over or around the touch position of the event Ev3 regardless of the aforementioned offset. The event Ev3 can be, for example, multi-tap, a change in the pressure of the touch, or a vertical flick that is performed while the aforementioned event Ev2 is still continuing. A vertical flick refers a rapid change in direction toward a direction that is roughly perpendicular to the moving direction of the touch position of the event Ev2. The user interface in this scenario is advantageous in a situation where, for example, a user wants to immediately pull a cursor, which has once moved away from his fingertip for the reason that the movement rate is not 100 %, toward the fingertip. That is, the aforementioned event Ev3 is an event that can trigger a movement of the cursor to an absolute touch position.

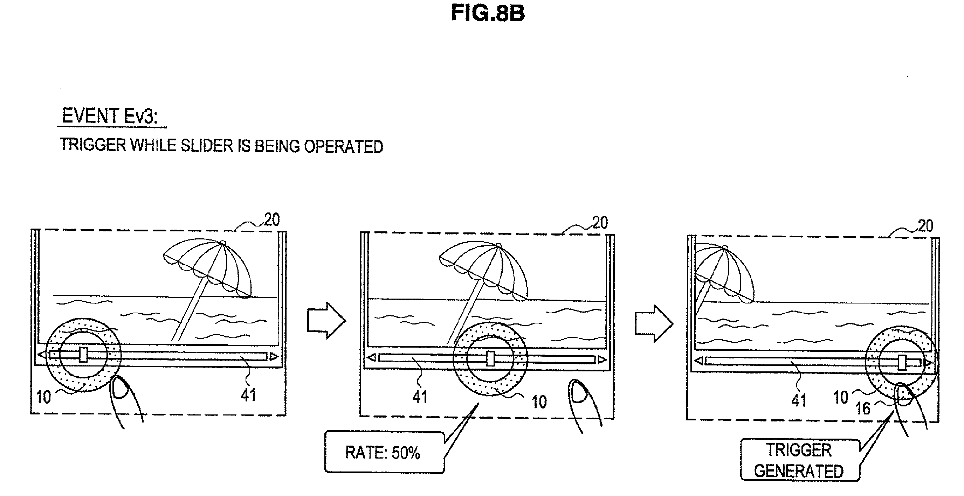

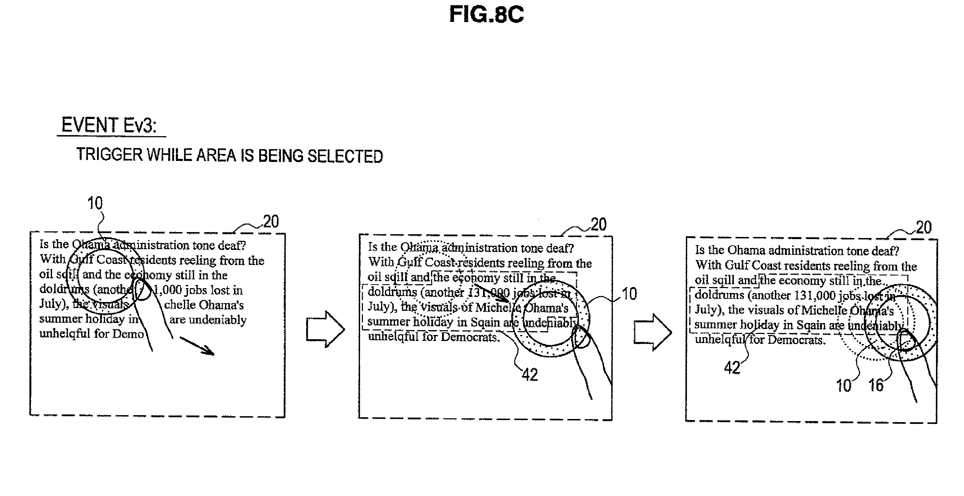

For example, in the example of FIG. 8A, when a user touches outside the frame of the cursor 10 and drags it, the cursor 10 will move at a movement rate of 50 % and thus be located away from the fingertip of the user (see the left and center views in FIG. 8A). Next, when an event Ev3 such as multi-tap, a change in the pressure of the touch, or a vertical flick is recognized, the cursor 10 will move to a position over around the touch position 16 regardless of the movement rate (see the right view in FIG. 8). An operation such as multi-tap, a change in the pressure of the touch, or a vertical flick is an operation that a user is likely to perform continuously from a drag operation or the like. Thus, using the event Ev3 as a trigger to pull the cursor position can contribute to improving the operability of the user interface.

It is also conceivable that the user may want to immediately pull not only a cursor that is moving due to a drag operation or the like but also a cursor that is not in motion. In such a case, double-tap (successive taps within a short period of time) can be used as a trigger event for the operation, for example.

FIG. 8B is an example of another scene where the event Ev3 can be used. In the example of FIG. 8B, a slider 41 is displayed on the touch screen 20 for scrolling through the displayed content (see the left view in FIG. 8B). A user places the operation target position of the cursor 10 over the knob of the slider 41, for example, and then touches outside the frame of the cursor 10 and drags it to the right. Accordingly, the knob moves to the right with the cursor 10 at a movement rate of 50 %, and accordingly, the content displayed on the touch screen 20 is scrolled through (see the center view in FIG. 8B). Further, when an event Ev3 is recognized, the knob and the cursor 10 will move to a portion over or around the touch position 16 regardless of the movement rate (see the right view in FIG. 8B).

FIG. 8C shows still another scene where the event Ev3 can be used. In the example of FIG. 8C, the cursor 10 and text are displayed on the touch screen 20. A user can select a part of the text by dragging the cursor 10. The center view in FIG. 8C shows a selected range 42 that is selected by dragging the cursor 10. However, as the offset between the operation target position and the touch position is maintained, if the movement rate is 100 %, for example, a user may not be able to select the edge of the touch screen 20. In such a case, however, if the user inputs an event Ev3, the cursor 10 will move to a position over or around the touch position 16 regardless of the movement rate, whereby selection of the text displayed on the edge of the touch screen 20 becomes possible (see the right view in FIG. 8C).

### [2-3. Object Locking]

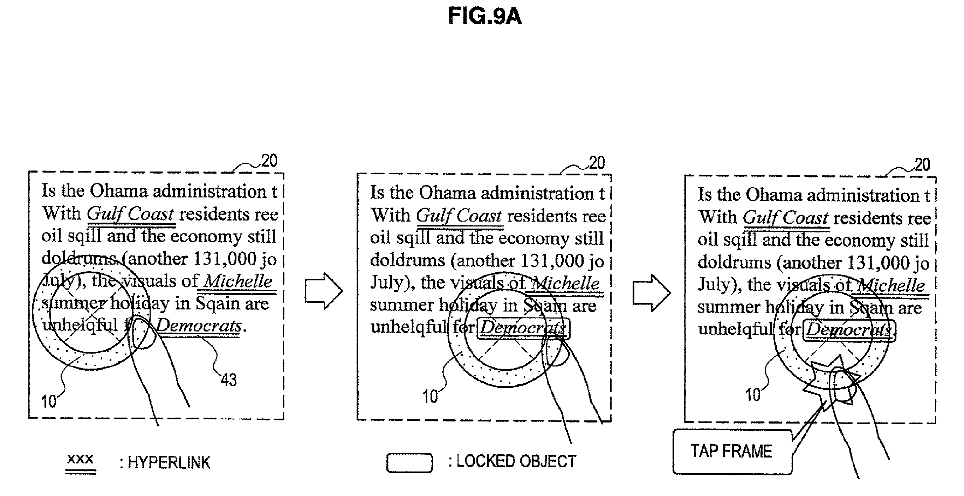

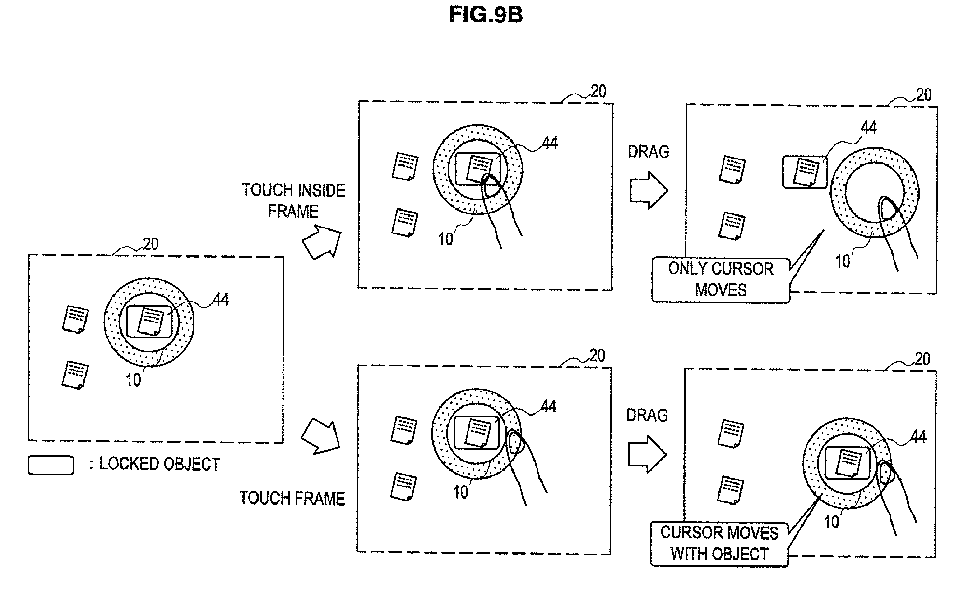

FIGS. 9A and 9B are explanatory diagrams illustrating a third example of a GUI in accordance with this embodiment. In the scenario herein, the display controller 150, when the operation target position overlaps an operable object displayed on the touch screen 20, locks the object, and also changes the color, the shape, or the size of the frame of the cursor 10. Examples of operable objects herein include a hyperlink on a Web browser, a thumbnail in a digital album, a function icon on a desktop screen, and a button on an application screen. The display controller 150, even when the cursor position has moved after the operable object was locked once, keeps on handling the object as the operation target until a given condition (e.g., generation of a predetermined event for unlocking the object, or movement of the cursor over a distance that is greater than a predetermined distance) is satisfied.

For example, in the example of FIG. 9A, text displayed on the touch screen 20 includes three double-underlined hyperlinks (see the left view in FIG. 9A). Herein, when a user drags the cursor 10 and places the operation target position over a hyperlink 43, the display controller 150 will lock the hyperlink 43 (see the center view in FIG. 9A). Then, when the user taps (or double-taps, for example) the frame of the cursor 10, for example (see the right view in FIG. 9A), the hyperlink will be executed, so that the displayed content will move to the link destination.

Locking an object as described above is particularly advantageous when operating a small object displayed on the touch screen 20 with high display resolution. For example, there are not a few cases in which a finger tap operation fails to tap a desired touch position. Therefore, even when a user taps on the touch screen 20 for operating an object, he may not be able to operate the intended object as a result of failing to tap the operation target position. In this scenario, however, the object is locked as described above. Thus, the user is surely able to operate the operation target object. In this case, the ring-shape cursor 10 also serves as an aiming field for locking the object.

The locked object can also be configured to be movable with the cursor 10. The display controller 150 can determine whether or not to move the object along with a touch event such as a drag or a flick in accordance with the gap between the touch position and the operation target position, for example.

For example, in the example of FIG. 9B, three movable icons are displayed on the touch screen 20. Among them, the operation target position of the cursor 10 overlaps the icon 44, and the icon 44 is locked (see the left view in FIG. 9B). Then, when a user touches inside the frame of the cursor 10 and drags it, the cursor 10 alone will move away from the icon 44 (see the upper views in FIG. 9B). Meanwhile, when a user touches the frame of the cursor 10 and drags it, the cursor 10 will move with the icon 44 (see the lower views in FIG. 9B).

### [2-4. Magnification Display within Cursor]

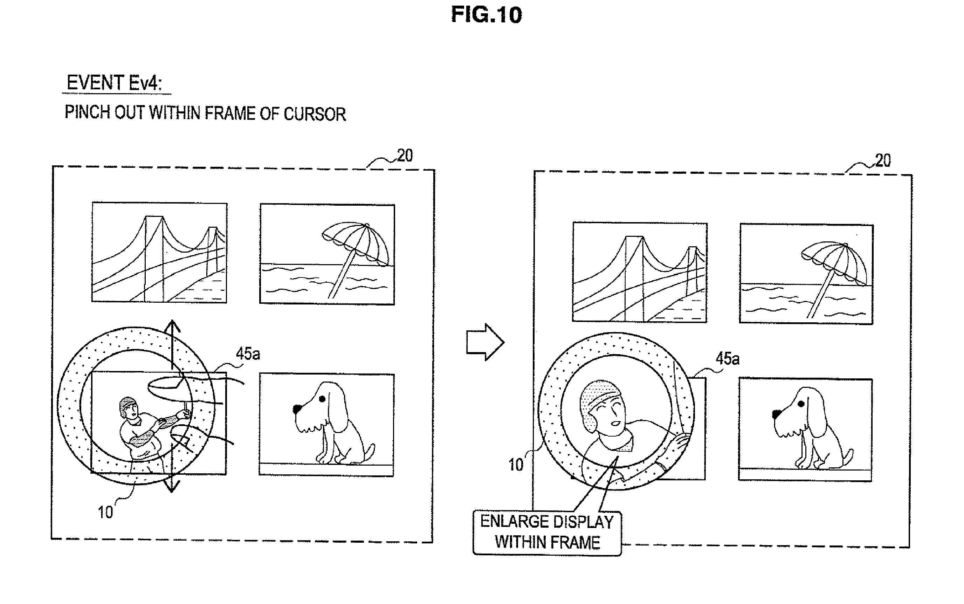

FIG. 10 is an explanatory diagram illustrating a fourth example of a GUI in accordance with this embodiment. In the scenario of FIG. 10, the display controller 150, when the recognition unit 140 has recognized a fourth touch event (an event Ev4) within the frame of the cursor 10, enlarges (zooms in) or shrinks (zooms out) a display inside the frame of the cursor 10. The event Ev4 can be, for example, pinch-out or pinch-in. In this case, "pinch-out" can correspond to enlarging the display, and "pinch-in" can correspond to shrinking the display. Note that "pinch-out" refers to an operation of widening the gap between two fingers touching the screen, and "pinch-in" refers to an operation of narrowing the gap between two fingers touching the screen.

In the example of FIG. 10, four thumbnails are displayed on the touch screen 20. Among them, the operation target position of the cursor 10 overlaps the thumbnail 45a. Then, when a user pinches out within the frame of the cursor 10, for example, a display inside the frame of the cursor 10 will be enlarged. Though not shown, if the user further pinches in within the frame of the cursor 10, the display inside the frame of the cursor 10 can be shrunk or restored to the original state.

As described above, with the cursor having a frame surrounding the operation target position, it is possible to implement a function, which is equivalent to the loupe function, through a more intuitive operation.

### [2-5. Operation in Depth Direction]

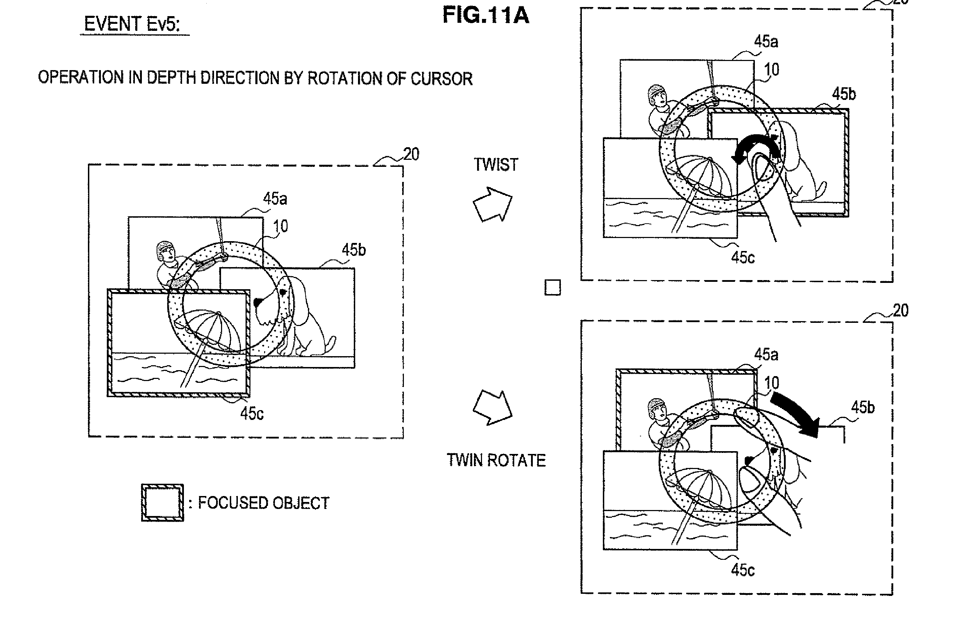

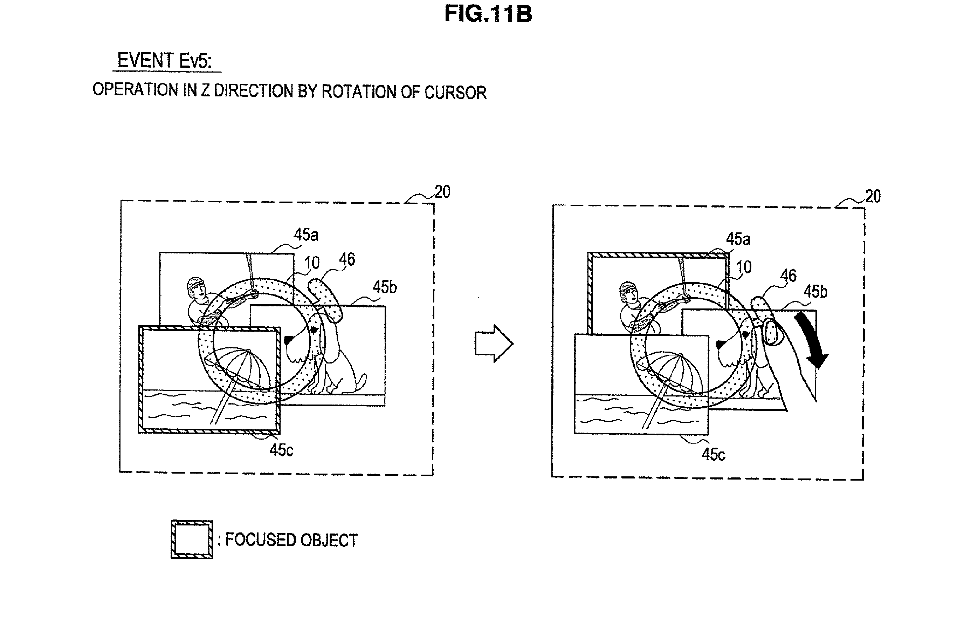

FIGS. 11A and 11B are explanatory diagrams each illustrating a fifth example of a GUI in accordance with this embodiment. In this scenario, the display controller 150, when the operation target position overlaps a plurality of operable objects, selects one of the plurality of objects as the operation target in response to a fifth touch event (an event Ev5) that is associated with a rotation of the cursor recognized by the recognition unit 140. The event Ev5 can be, for example, a twist (an operation of twisting two fingers against the screen while touching the same position) or a twin rotation (an operation of, in a multi-touch state, drawing an arc with the second finger while fixing the position of the first finger).

For example, in the example of FIG. 11A, three thumbnails 45a, 45b, and 45c that overlap one another are displayed on the touch screen 20. In addition, the cursor 10 overlaps the three thumbnails 45a, 45b, and 45c. Among them, a focus is set on the thumbnail 45c at a moment shown in the left view in FIG. 11A (i.e., the thumbnail 45c is the operation target). In such a state, when a user performs a twist or twin rotation operation within the cursor 10, for example, the aforementioned event Ev5 is recognized. Consequently, the display controller 150 shifts the focus in the Z direction (the depth direction of the touch screen 20). For example, in the example shown in the upper right view in FIG. 11A, the focus has shifted to the thumbnail 45b. In addition, in the example shown in the lower right view in FIG. 11A, the focus has shifted to the thumbnail 45a.

Referring to FIG. 11B, a handle 46 is added to the frame of the cursor 10 on the touch screen 20. The handle 46 is a user interface to be operated by a user to rotate the cursor 10. Dragging such handle 46 will also be handled as the aforementioned event Ev5. In the example of FIG. 11B, a user drags the handle 46 of the cursor 10 so that the focus shifts to the thumbnail 45a.

Such operation in the depth direction (e.g., a focus shift) is advantageous in a situation where objects that are displayed on a screen with high display resolution overlap one another and an individual object is thus difficult to be selected.

### [2-6. Zoom of Selected Range]

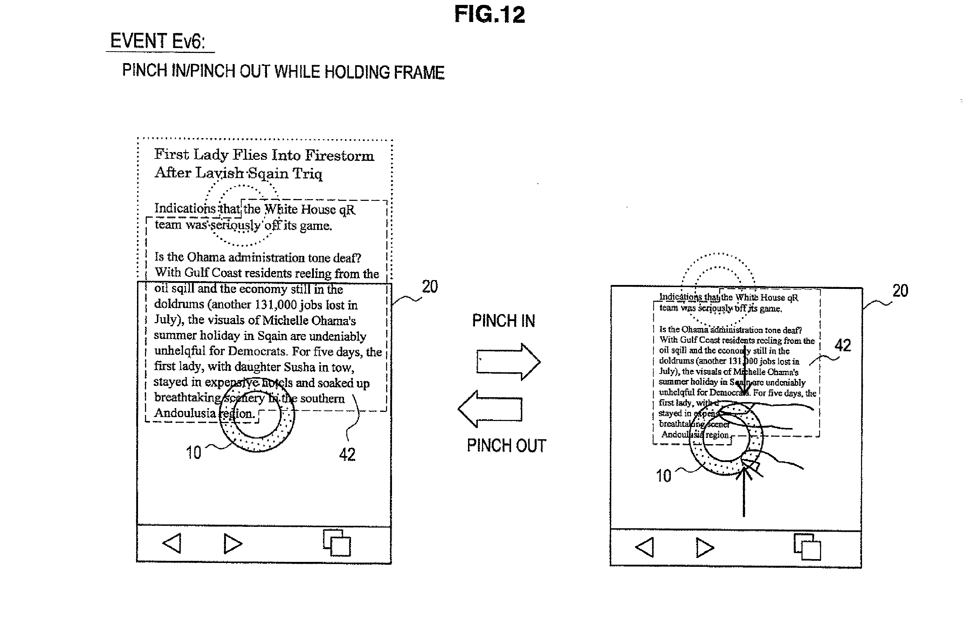

FIG. 12 is an explanatory diagram illustrating a sixth example of a GUI in accordance with this embodiment. In the scenario of FIG. 12, the display controller 150, when the recognition unit 140 has recognized a sixth event (an event Ev6) that involves a touch within the frame of the cursor 10, shrinks the display on the touch screen 20 so that both a reference position, which has been set in advance of the sixth touch event, and the operation target position are displayed on the touch screen 20. Herein, a reference point that is set in advance can be, for example, the start position of a selection range in selecting an area, or the position of a bookmark set within long text. The sixth touch event can be, for example, pinch-in on the frame of the cursor under the circumstance that a reference position has been set.

For example, referring to the left view in FIG. 12, the start position of a selected range 42 is outside the screen as a result of the touch screen 20 having been scrolled through down. In such a state, when a user performs a pinch-in operation while holding the frame of the cursor 10, for example, the display on the touch screen 20 will shrink so that both the reference position and the latest operation target position of the cursor 10 are displayed (see the right view in FIG. 12). Consequently, the user is able to easily see the whole selected range 42 on the touch screen 20. Meanwhile, when the user performs a pinch-out operation while holding the frame of the cursor 10, for example, the content displayed on the touch screen 20 can be restored to the original state as shown in the left view in FIG. 12.

### [2-7. Deformation of Cursor]

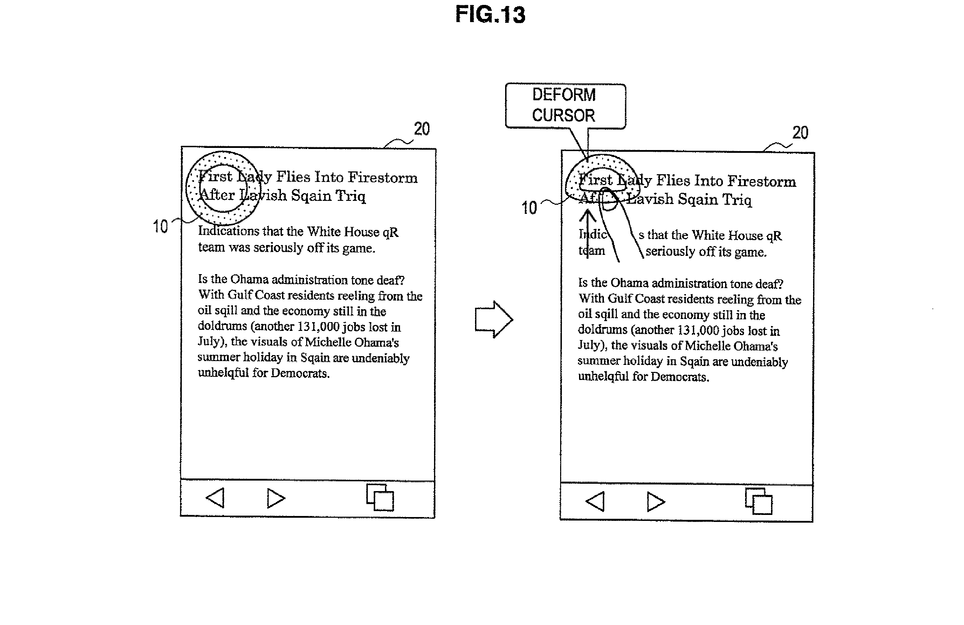

FIG. 13 is an explanatory diagram illustrating a seventh example of a GUI in accordance with this embodiment. In the scenario of FIG. 13, when the movement path of the cursor in accordance with the aforementioned second touch event Ev2 collides with a non-display area of the cursor, the display controller 150 does not move the cursor 10, but instead, deforms the frame of the cursor 10. The non-display area of the cursor can be, for example, the edge of the touch screen 20 or any other area within the screen when the screen cannot be scrolled through any further.

For example, referring to the left view in FIG. 13, text described on a given page is displayed on the touch screen 20. The cursor 10 is located on the uppermost portion of the page. In such a state, when a user further drags the cursor 10 upward, for example, the cursor 10 will not move, but instead, the frame of the cursor 10 will deform such that it is squashed (see the right view in FIG. 12). The direction in which the frame of the cursor 10 is squashed coincides with the direction of the drag. Accordingly, the user can intuitively understand that the cursor 10 cannot be moved any further.

### [2-8. Correction of Operation Target Position]

As described above, there are not a few cases in which, when a user touches the touch screen 20 with his finger as an input object, for example, a slight discrepancy will occur between the intended touch position and the actual touch position. It is also possible that the touch position may slightly move in a short time immediately after the touch. Thus, the display controller 150 can absorb small fluctuation in the touch position, which is not intended by the user, by correcting the operation target position taking hysteresis into consideration, not by always or precisely locating the operation target position of the cursor 10 at the center of the frame.

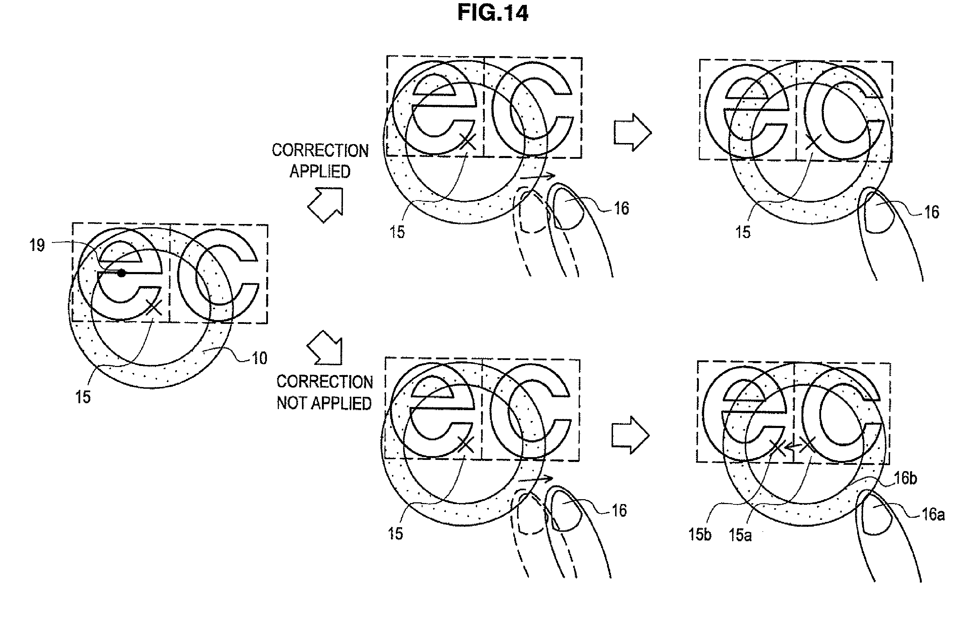

FIG. 14 is an explanatory diagram illustrating the aforementioned correction of the operation target position. The left view in FIG. 14 shows two adjacent characters "e" and "c" in a character string, which makes up text displayed on the screen, and the cursor 10. The operation target position 15 of the cursor 10 overlaps the character "e." Herein, suppose that at a moment when a user touched the cursor 10 in an attempt to operate the cursor 10, the touch position slightly moves rightward. At this time, if the operation target position is not corrected, the operation target position 15 would slightly move rightward, whereby the operation target can become the letter "c," not "e" (see the upper views in FIG. 14). However, this operation is not intended by the user. Thus, for example, the display controller 150 corrects the operation target position 15 for a predetermined period of time (e.g., several tenths of seconds) from the start of the touch so that hysteresis is generated. Referring to the lower views in FIG. 14, the operation target position of the cursor 10 is corrected from the position 15a to the position 15b, which means that the operation target remains to be the letter "e," not shifting to the letter "c." Note that the amount of the correction applied to the operation target position 15 can be determined from, for example, the amount of the movement of the touch position from the start of the touch. Alternatively, the amount of the correction applied to the operation target position 15 can be determined from, for example, the difference between the operation target position 15 and the center of the operation target (e.g., the center 19 of the character "e" in FIG. 14) at the start of the touch.

### <3. Description of Variations>

Heretofore, description has been made mainly of an example of the information processing device 100 having a single screen. However, this embodiment can also exert the unique advantageous effect on a device that handles a plurality of screens. Thus, this section will describe an example in which the aforementioned cursor is used in a device that handles a plurality of screens as one variation of this embodiment.

### [3-1. Device Configuration]

### (1) Overview of Hardware Configuration

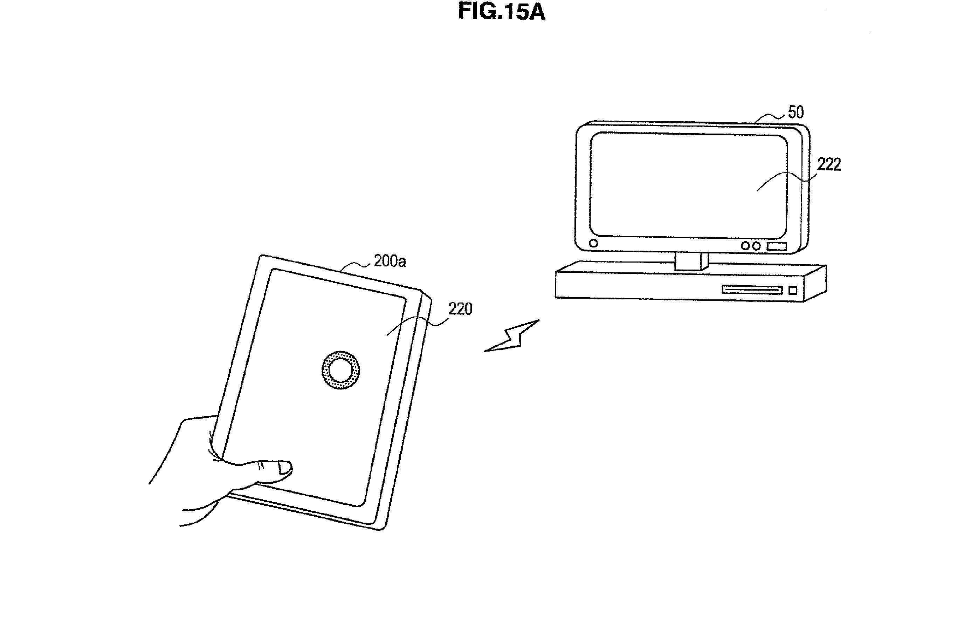

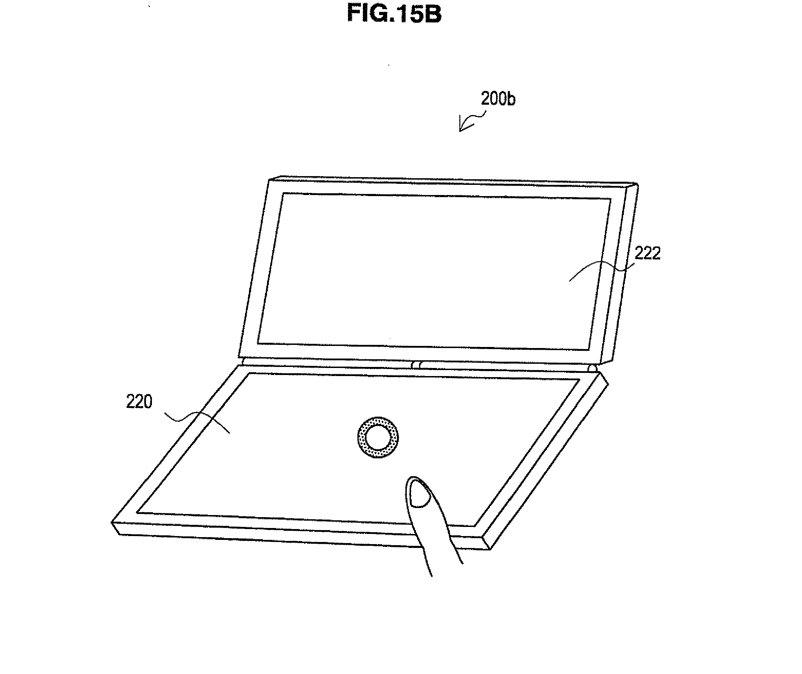

FIGS. 15A and 15B are schematic diagrams each illustrating a hardware configuration of an information processing device 200 in accordance with this variation.

Referring to FIG. 15A, an information processing device 200a held by a user and a display device 50 are shown. The information processing device 200a can include the same hardware configuration as the information processing device 100 that is exemplarily shown in FIG. 1. Further, the information processing device 200a can communicate with the display device 50. The display device 50 can be, for example, a digital information home appliance such as a digital television or a content player. Alternatively, the display device 50 can be an additional monitor for the information processing device 200a or the like. The information processing device 200a includes a touch screen 220. Meanwhile, the display device 50 includes a screen 222.

Referring to FIG. 15B, an information processing device 200b is shown. The information processing device 200b can include the same hardware configuration as the information processing device 100 that is exemplarily shown in FIG. 1. Further, the information processing device 200b includes a touch screen 220 and a screen 222. The screen 222 can be either a touch screen or a screen with only a display function.

The information processing device 200a exemplarily shown in FIG. 15A provides, in addition to the application function of the information processing device 200a, a GUI for a user to indirectly (or remotely) operate content displayed on the display device 50. Meanwhile, the information processing device 200b exemplarily shown in FIG. 15B provides a GUI for a user to operate content, which is displayed on the screen 222, via the touch screen 220. These GUIs can also be implemented using the aforementioned cursor. In the following description, the information processing devices 200a and 200b will be collectively referred to as the information processing device 200 unless there is a need to distinguish between the information processing devices 200a and 200b.

### (2) Logical Configuration

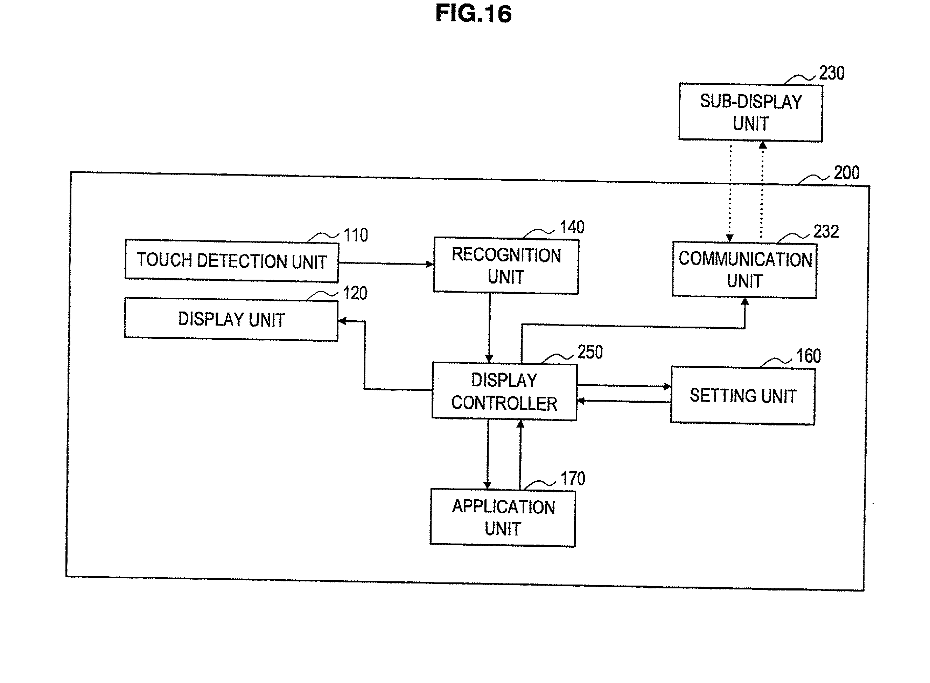

FIG. 16 is a block diagram showing an exemplary logical configuration of the information processing device 200 in accordance with this variation. Referring to FIG. 16, the information processing device 200 includes a touch detection unit 110, a display unit 120, a communication unit 232, a recognition unit 140, a display controller 250, a storage unit 160, and an application unit 170. The communication unit 232 is connected to a sub-display unit 230.

The sub-display unit 230 is a logical block corresponding to the screen 222 exemplarily shown in FIG. 15A and FIG. 15B. The sub-display unit 230, under the control of the display controller 250, displays an image using the screen 222.

The communication unit 232 serves as a communication means via which the display controller 250 communicates with the sub-display unit 230, for example. The communication unit 232 can be implemented using a communication interface that compiles with a wireless communication protocol such as, for example, Bluetooth®, UWB (Ultra Wide Band), or a wireless LAN (Local Area Network). In addition, when the screen 222 is physically a part of the information processing device 200 as in the example of FIG. 15B, the communication unit 232 can be implemented using simpler signal lines.

The display controller 250 controls the content of output images displayed by the display unit 120 and the sub-display unit 230. In addition, in this variation, the display controller 250 causes the display unit 120 and the sub-display unit 230 to display a specific cursor. Then, the display controller 250, in response to a touch event recognized by the recognition unit 140, controls display of the cursor and the associated object, whereby a wide variety of user interfaces are implemented. The basic structure of the cursor displayed by the display controller 250 can be similar to any of the structures described with reference to FIG. 3 to FIG. 6.

### [3-2. Examples of GUI]

In this variation, the information processing device 200 can provide a user with a wide variety of GUIs that have been described hereinabove, using the touch screen 220. Further, the information processing device 200 provides GUIs such as those described below.

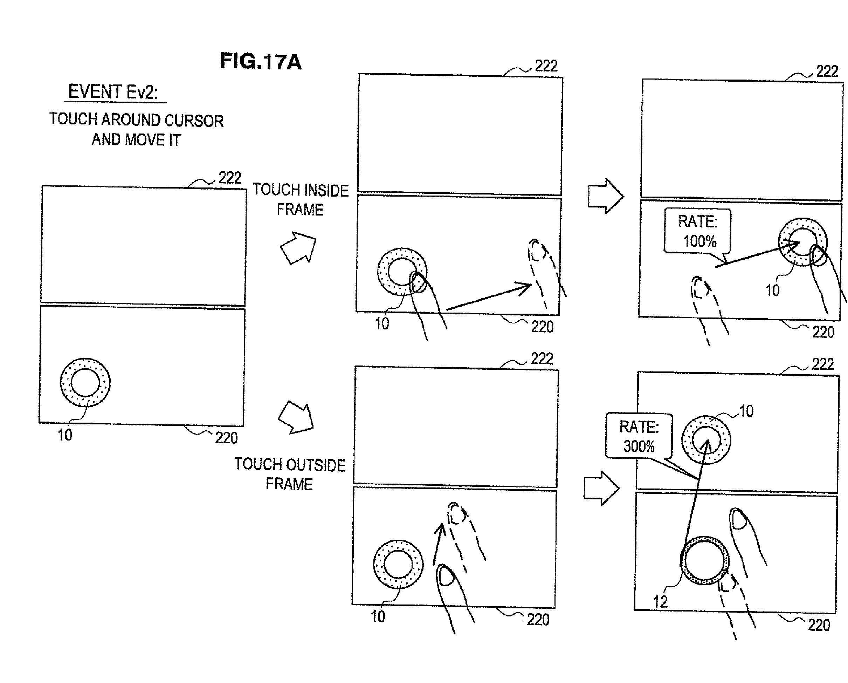

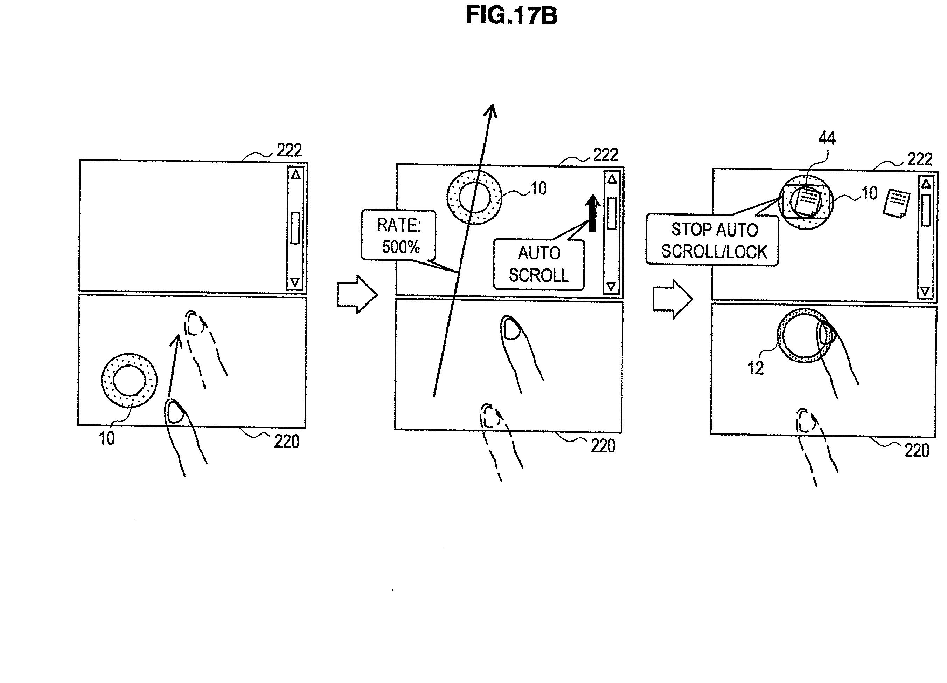

FIG. 17A and FIG. 17B are explanatory diagrams each illustrating an exemplary GUI in accordance with this variation. In the scenario herein, the display controller 250, when the recognition unit 140 has recognized the aforementioned second touch event (the event Ev2) associated with a movement of the touch position, moves the cursor at a rate that varies according to the gap between the touch position and the operation target position at the start of the movement. As described above, the event Ev2 can be, for example, a drag or a flick. That is, this scenario is similar to the scenario described with reference to FIG. 7.

For example, in the example of FIG. 17A, it is assumed that when the aforementioned gap is less than or equal to a threshold that is equal to the radius *D*2 of the outer circumference of the frame 14 of the cursor 10, the movement rate is 100 %, and when the aforementioned gap is greater than the threshold, the movement rate is 300 %. Such definition of the movement rate is advantageous in a situation where the cursor position should be moved to the outside of the touch screen 220.

Referring to the upper views in FIG. 17A, when a user touches inside the frame of the cursor 10 and drags it, the amount of the movement of the cursor 10 is equal to the amount of the movement of the touch position. That is, the movement rate is 100 %. Meanwhile, referring to the lower views in FIG. 17A, when a user touches outside the frame of the cursor 10 and drags it, the amount of the movement of the cursor 10 is three times that of the touch position. Consequently, the cursor 10 moves from the touch screen 220 to the screen 222 in response to the drag taking place within the touch screen 220.

In addition, in this embodiment, the display controller 250, when the cursor 10 has moved to the screen 222 in response to the event Ev2, further displays an auxiliary cursor on the touch screen 220 for allowing the user to operate the cursor 10. For example, in the lower views in FIG. 17A, an auxiliary cursor 12 for operating the cursor 10, which has moved to the screen 222, is displayed on the touch screen 220. Operating this auxiliary cursor 12, the user can indirectly control the content displayed on the screen 222 as in the case of a user interface on which the cursor 10 is directly operated.

When the movement rate is over 100 % as in the example of FIG. 17A, it is possible that the destination of the cursor 10 may be an area that is not displayed on the screen at that point in time. In such a case, the display controller 250, instead of moving the cursor 10 to the outside of the screen, causes the cursor to remain on the edge of the screen and automatically scrolls through the screen, so that the cursor is moved to the target destination. If an operable object is found to exist on the movement path of the cursor, for example, while the cursor is moving and the screen is automatically scrolled through as described above, the display controller 250 can stop the cursor over the operable object.

For example, in the example of FIG. 17B, as a user has dragged outside the frame of the cursor 10, the cursor 10 moves from the touch screen 220 to the screen 222 at a movement rate of 500 %. Further, as the destination of the cursor 10 associated with the drag is outside the screen 222, the cursor 10 stops at the upper edge of the screen 222, and instead, the screen 222 is automatically scrolled through (see the center view in FIG. 17B). Then, when an icon 44, which is an operable icon, has overlapped the cursor 10 during the scroll, the automatic scrolling terminates, and thus the cursor 10 stops over the icon 44. Further, the icon 44 is locked by the cursor 10 (see the right view in FIG. 17B). In this case, the auxiliary cursor 12 is also displayed on the touch screen 220 so that the user can immediately operate the locked icon 44 using the auxiliary cursor 12.

Note that it would be also advantageous to, under the circumstance that a large number of operable objects exist, disable the cursor stopping function such as the one shown in FIG. 17B in order to prevent an object, which is not intended by the user, from being locked. In such a case, the display controller 250 can switch between enabling and disabling the cursor stopping function in response to a given touch event.

### <4. Exemplary Process Flow>

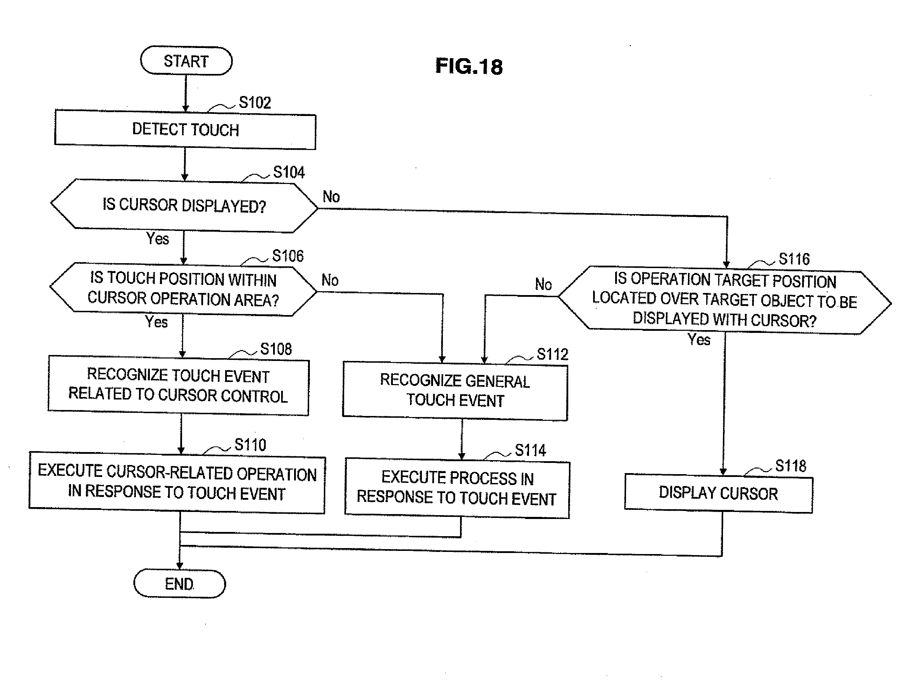

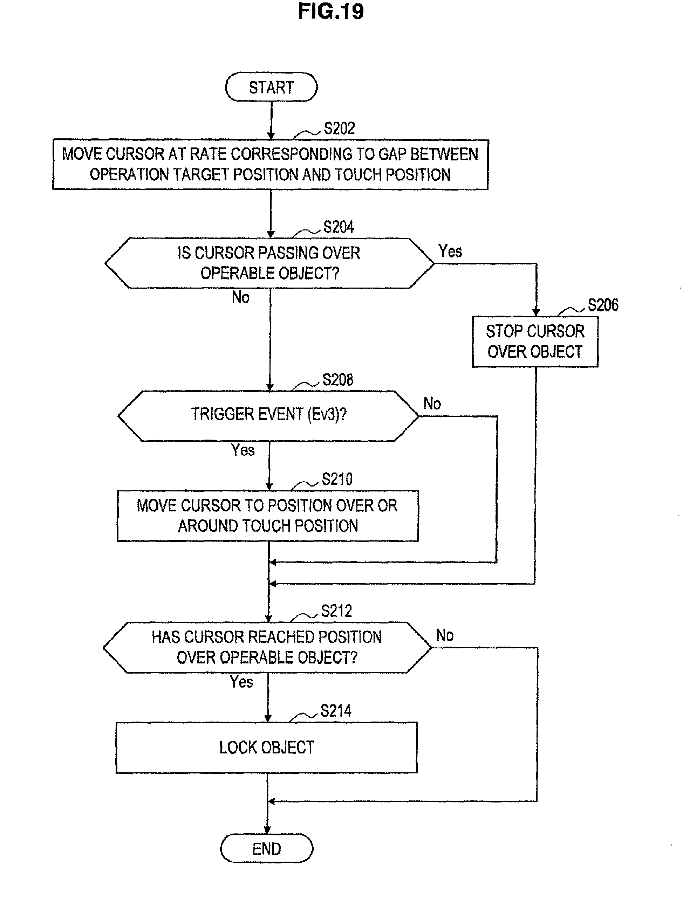

Next, a flow of the display control process in accordance with the aforementioned embodiment will be described with reference to FIGS. 18 and 19. FIG. 18 is a flowchart showing an exemplary schematic flow of the display control process. Although the description will be made from the perspective of the information processing device 100, the process of the information processing device 200 can be similarly performed.

First, referring to FIG. 18, a touch is detected by the touch detection unit 110 of the information processing device 100 (step S102). Then, the recognition unit 140 determines if a cursor is already displayed on the touch screen 20 (step S104). Herein, if a cursor is already displayed on the touch screen 20, the process proceeds to step S106. Meanwhile, if a cursor is not displayed on the touch screen 20, the process proceeds to step S 116.

In step S106, the recognition unit 104 determines if the touch position detected by the touch detection unit 110 is within a cursor operation area of the cursor 10 (step S106). The cursor operation area corresponds to, for example, an area inside the rectangular area 18 that has the operation target position 15 as the center as exemplarily shown in FIG. 3. Herein, if the touch position is within the cursor operation area, the process proceeds to step S108. Meanwhile, if the touch position is outside the cursor operation area, the process proceeds to step S 112.

In step S108, the recognition unit 140 recognizes a touch event related to a cursor control (step S108). Examples of the touch event related to a cursor control recognized herein can include any of the aforementioned events Ev2 to Ev6. Then, an operation related to the cursor 10 is executed by the display controller 150 in response to the recognized touch event (step S110). The operation executed herein can include a variety of GUI operations described in this specification.

Meanwhile, in step S 112, the recognition unit 140 recognizes a general touch event that is similar to the existing technologies (step S 112). Then, a process corresponding to the generated touch event is executed by the display controller 150 or the application unit 170 (step S114).

In step S116, the recognition unit 140 determines the operation target position having an offset with respect to the touch position, and determines if the determined operation target position is located over a target object to be displayed with a cursor (step S116). The value of the offset herein is the initial value. If the operation target position is located over a target object to be displayed with a cursor, the cursor 10 with a frame that surrounds the operation target position is newly displayed on the touch screen 20 by the display controller 150 (step S118). Meanwhile, if the operation target position is not located over the target object to be displayed with the cursor, the recognition unit 140 recognizes a general touch event that is similar to the existing technologies (step S112). Thereafter, a process corresponding to the recognized touch event is executed by the display controller 150 or the application unit 170 (step S 114).

FIG. 19 is a flowchart showing an exemplary detailed flow of the display control process when a touch/movement-related event (i.e., the aforementioned event E2) is recognized. The process shown in FIG. 19 can be executed as a part of step S 110 in FIG. 18.

Referring to FIG. 19, the display controller 150 moves the cursor 10 at a movement rate corresponding to the gap between the operation target position and the touch position at the start of the touch (step S202). Herein, the display controller 150, upon determining that the movement path of the cursor 10 is passing over an operable object (step S204), stops the cursor 10 over the object (step S206). In addition, the display controller 150, if the recognition unit 140 has recognized the event Ev3 while the cursor 10 is moving (step S208), moves the cursor 10 to a position over or around the touch position of the event Ev3 (step S210).

Next, the display controller 150 determines if the cursor has reached a position over the operable object (step S212). When the cursor has reached the position over the operable object, the display controller 150 locks the object (step S214). Note that when the operable object is already locked at the start of the touch, the object can also be moved with the cursor 10. Then, the display control process of the display controller 150 in accordance with the touch/movement-related event terminates.

### <5. Conclusion>

One embodiment and variations of the present disclosure have been described above with reference to FIGS. 1 to 19. According to the aforementioned configuration, a cursor with a frame that surrounds the operation target position is displayed on the screen of the information processing device in response to an operation event (e.g., a touch event or a proximity event) on the screen. The operation target position of the cursor is a position that has an offset with respect to the operation detection position (e.g., a touch position or a proximity detection position) of the operation event. Thus, even when the cursor is displayed, there is no possibility that an object that is located at the operation target position will be covered with an input object such as a finger or a stylus. Further, by using a ring-shape cursor with a frame that surrounds the operation target position, it becomes possible to provide a user with a wide variety of intuitive user interfaces in accordance with the positional relationship between the frame and the operation detection position.

For example, when an operation event associated with a movement of the operation detection position, such as a drag or a flick is recognized, the cursor can be moved at a movement rate that varies according to the gap between the operation detection position and the operation target position at the start of the movement. Such movement rate can be defined for different applications for different purposes, for example. For example, the aforementioned cursor can be used to finely adjust the operation target position on a touch screen or a proximity detection screen with high display resolution. Further, it is also possible to move the cursor to another screen and operate an object that is displayed on the other screen, using the aforementioned cursor.

Although the preferred embodiments of the present disclosure have been described in detail with reference to the appended drawings, the present disclosure is not limited thereto. It is obvious to those skilled in the art that various modifications or variations are possible insofar as they are within the technical scope of the appended claims or the equivalents thereof. It should be understood that such modifications or variations are also within the technical scope of the present disclosure.

The present disclosure contains subject matter related to that disclosed in Japanese Priority Patent Application JP 2010-185070 filed in the Japan Patent Office on August 20, 2010.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. A display controller, comprising:
an interface configured to send frame information that causes a display unit to display a frame; and
a controller that is connected to said interface and sends said frame information to said display so said frame is positioned on said display at an operation target position that is offset by a predetermined distance on said display from an operation detection position.

2. The display controller of claim 1, further comprising:
a recognition unit that detects said operation detection position either in response to a contact made with the display at said operation detection position, or based on proximity of a selection device to said display unit without directly contacting the display unit.

3. The display controller of claim 1, further comprising
a recognition unit that detects either an abstracted touch event, or a touch event, wherein
said controller sends the frame information to the display in response to said touch event.

4. The display controller of claim 1, further comprising:
a computer readable storage device that stores at least a part of said frame information as cursor definition data that defines a shape and a size of said frame.

5. The display controller of claim 4, wherein:
said computer readable storage device also stores an initial value and a current value of the offset.

6. The display controller of claim 5, wherein:
said frame has a border either in a box shape or in a ring shape, wherein said ring shape being at least one of a continuous ring shape and a ring shape with gaps.

7. The display controller of claim 3, wherein in the case of a touch event the frame remains displayed after a conclusion of the touch event.

8. The display controller of claim 3, wherein in the case of a touch event said recognition unit detects when the touch event includes moving a contact point along a surface of said display unit, and
said controller causes the frame to move along with the contact point on the display unit while maintaining the offset at the predetermined distance.

9. The display controller of claim 8, wherein
said controller maintains said offset in response to the contact point being dragged side-to-side on the display unit.

10. The display controller of claim 3, wherein
said recognition unit recognizes a second touch event that follows the touch event, and
said controller moves the frame at a rate that varies according to a gap between the operation detection position and the operation target position at a start of frame movement.

11. The display controller of claim 3, wherein
said recognition unit recognizes a second touch event that comes after the touch event, and said controller moves the frame at a rate that is a function of a gap relative to a threshold.

12. The display controller of claim 11, wherein
said recognition unit recognizes a second touch event that comes after the touch event, and said controller moves the frame on the display unit at a rate that is different for respective contact points at
an interior of said frame,
on said frame, and
an exterior of said frame.

13. The display controller of claim 3, wherein
said recognition unit successively recognizes a second touch event, and a third touch event that both follow the touch event, and
in response to the third touch event, said controller moves the frame over or around a contact position of the third touch event regardless of the offset.

14. The display controller of claim 13, wherein
said third touch event being one of a multi-tap, a change in pressure, and a flick.

15. The display controller of claim 1, wherein:
said controller locks a display position about a displayed object.
